# EUROPEAN PATENT APPLICATION

(11) **EP 4 852 153 A1**
(43) Date of publication of application: **09.12.2026**
(21) Application number: 25778554.3
(22) Date of filing: 14.02.2025
(51) Int. Cl.: H01M 10/6555, H01M 10/658

(54) **PARTITION MEMBER**

(30) Priority: 28.03.2024 JP 2024055042
(71) Applicant: Sumitomo Riko Company Limited, Komaki-shi, Aichi 485-8550 (JP)
(72) Inventor: SAITO, Yuki, Komaki-shi, Aichi 485-8550 (JP); ITO, Naho, Komaki-shi, Aichi 485-8550 (JP); ICHIKAWA, Hiroyuki, Komaki-shi, Aichi 485-8550 (JP); KURIKUMA, Hajime, Komaki-shi, Aichi 485-8550 (JP); SUGIYAMA,Takayuki, Toyota-shi, Aichi 471-8571 (JP); GODA, Raito, Toyota-shi, Aichi 471-8571 (JP)
(74) Representative: Müller-Boré & Partner Patentanwälte PartG mbB
(86) International application number: PCT/JP2025/005060
(87) International publication number: WO 2025/204255

(57) **Abstract**

It is an object of the present disclosure to provide a partition member that can suppress a reduction in heat-insulating properties. A partition member (1) is interposed between any pair of cells (92) adjacent to each other in a stacking direction in a stack (91) of a plurality of cells (92). The partition member (1) includes: a heat-insulating layer (2); a spacer layer (5, 5a) interposed between the heat-insulating layer (2) and the cell (92) and made of a material different from that of the heat-insulating layer (2); and a permeation-suppressing layer (6, 6a) interposed between the heat-insulating layer (2) and the spacer layer (5, 5a) and configured to suppress permeation of the material of the spacer layer (5, 5a) into the heat-insulating layer (2).

## Description

### TECHNICAL FIELD

The present disclosure relates to a partition member that is disposed in a stack of a battery module.

### BACKGROUND ART

In the battery pack of Patent Document 1, a porous heat-insulating layer is interposed between a pair of adjacent cells in the stacking direction in order to suppress heat transfer between the pair of cells. In the assembled battery of Patent Document 2, a resin frame is interposed between a pair of adjacent cells in the stacking direction in order to suppress variation in the positions of the terminals of the cells.

### Related Art Documents

### Patent Documents

Patent Document 1: Japanese Unexamined Patent Application Publication No. 2021-144879 (JP 2021-144879 A)
Patent Document 2: Japanese Unexamined Patent Application Publication No. 2021-34151 (JP 2021-34151 A)

### SUMMARY OF THE INVENTION

### Problem to be Solved by the Invention

It is herein assumed that a partition member including both the heat-insulating layer and the resin frame is interposed between a pair of adjacent cells in the stacking direction. In this case, when the material forming the resin frame melts and liquefies due to abnormal heat generation of the cell, the material that has liquified may enter the pores of the heat-insulating layer, thereby impairing the porosity of the heat-insulating layer. That is, the heat-insulating properties of the heat-insulating layer may be reduced. It is therefore an object of the present disclosure to provide a partition member that can suppress a reduction in heat-insulating properties.

### Means for Solving the Problem

(1) In order to solve the above issue, the partition member of the present disclosure is a partition member interposed between any pair of cells adjacent to each other in a stacking direction in a stack of a plurality of cells. The partition member is characterized by including: a heat-insulating layer; a spacer layer interposed between the heat-insulating layer and the cell and made of a material different from a material of the heat-insulating layer; and a permeation-suppressing layer interposed between the heat-insulating layer and the spacer layer and configured to suppress permeation of the material of the spacer layer into the heat-insulating layer.

In this configuration, the layers of the stack are stacked in the stacking direction in the order of the cell, the spacer layer, the permeation-suppressing layer, and the heat-insulating layer. That is, the permeation-suppressing layer is interposed between the spacer layer and the heat-insulating layer. This configuration can suppress permeation of the material forming the spacer layer into the heat-insulating layer. Accordingly, even when the material forming the spacer layer is liquefied, permeation of the material that has liquified (hereinafter referred to as "liquefied material" as appropriate) from the spacer layer into the heat-insulating layer via the permeation-suppressing layer can be suppressed. As a result, a reduction in the heat-insulating properties of the heat-insulating layer can be suppressed.

(1-1) In the configuration of (1), it is preferable that the material of the spacer layer be a thermoplastic resin or a metal. With this configuration, even when the material forming the spacer layer melts and liquefies, permeation of the liquefied material into the heat-insulating layer can be suppressed.

(1-2) In any of the above configurations, it is preferable that the melting point of the material of the spacer layer be lower than the temperature at the time of abnormal heat generation of the cell. With this configuration, even when the material forming the spacer layer melts and liquefies due to abnormal heat generation of the cell, permeation of the liquefied material into the heat-insulating layer can be suppressed.

(1-3) In any of the above configurations, it is preferable that the melting point of the material of the permeation-suppressing layer be higher than the temperature at the time of abnormal heat generation of the cell. With this configuration, even when the material forming the spacer layer melts and liquefies due to abnormal heat generation of the cell, the permeation-suppressing layer can maintain its own structure and properties. Therefore, permeation of the liquefied material into the heat-insulating layer can be suppressed.

(2) In any of the above configurations, it is preferable that the heat-insulating layer be a compression-molded article of a granular porous material, the granular porous material being a porous body made of a granular material. A compression-molded article of a granular porous material has a large number of pores inside, and gas (such as air) is retained inside the pores. Accordingly, with this configuration, the heat-insulating properties of the heat-insulating layer can be improved.

(3) In any of the above configurations, it is preferable that the material of the spacer layer be any one of polypropylene, polyethylene, aluminum, an aluminum alloy, phenolic resin, polyacetal, acrylic, or a fiber-reinforced product of any one of these materials. With this configuration, the manufacturing cost of the spacer layer can be reduced. The spacer layer is desired to have a predetermined rigidity in order for a restraining force (a pressing force in the stacking direction) to be reliably applied to the cells. With this configuration, such rigidity can be easily ensured.

(4) In any of the above configurations, it is preferable that the permeation-suppressing layer be made of a porous material. With this configuration, at least part of the liquefied material can be absorbed by utilizing the porosity of the permeation-suppressing layer. Therefore, permeation of the liquefied material into the heat-insulating layer can be suppressed.

(5) In the configuration according to (4), it is preferable that the porous material be any one of glass fiber paper, paper-based phenolic laminate, carbon fiber paper, or ceramic fiber paper. All of these materials have excellent heat resistance. Therefore, even when the material forming the spacer layer melts and liquefies, the permeation-suppressing layer can maintain its porosity. Accordingly, the permeation-suppressing layer can reliably absorb the liquefied material. In addition, the manufacturing cost of the permeation-suppressing layer can be reduced.

### Effects of the Invention

The partition member of the present disclosure can suppress a reduction in heat-insulating properties.

### BRIEF DESCRIPTION OF THE DRAWINGS

[FIG. 1] FIG. 1 is an exploded perspective view of a battery module including a partition member of a first embodiment.
[FIG. 2] FIG. 2 is a top view of the battery module.
[FIG. 3] FIG. 3 is a sectional view of the portion within frame III in FIG. 2, taken along the front-rear direction.
[FIG. 4] FIG. 4 is an enlarged view of the portion within frame IV in FIG. 3.
[FIG. 5] FIG. 5 is an enlarged view of the portion within frame V in FIG. 4.
[FIG. 6] FIG. 6 is a partial sectional view of a partition member without a permeation-suppressing layer, taken along the front-rear direction.
[FIG. 7] FIG. 7 is a partial sectional view of a partition member of a second embodiment, taken along the front-rear direction.
[FIG. 8] FIG. 8 is a partial sectional view of a partition member of a third embodiment, taken along the front-rear direction.

### MODES FOR CARRYING OUT THE INVENTION

Hereinafter, embodiments of the partition member of the present disclosure will be described.

### <First Embodiment>

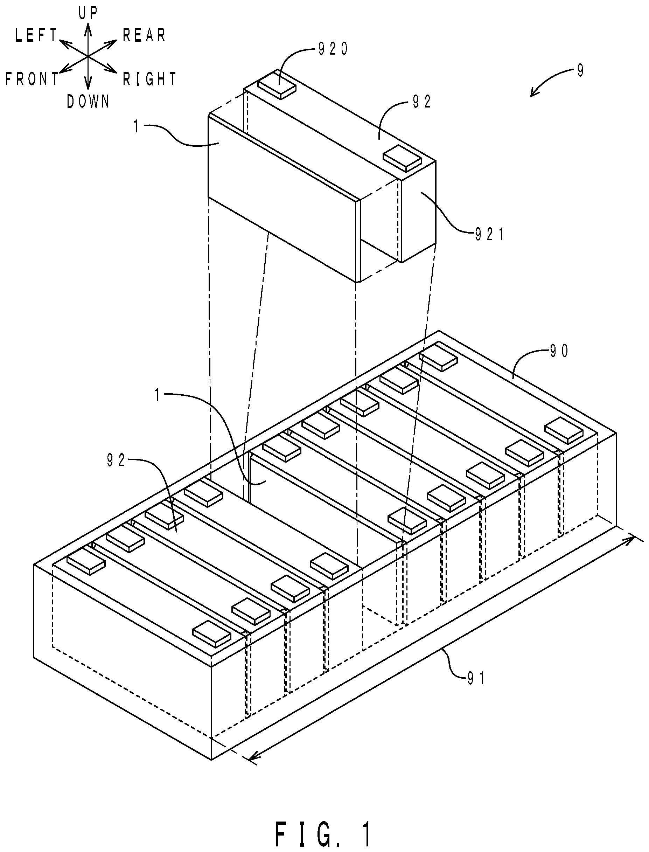

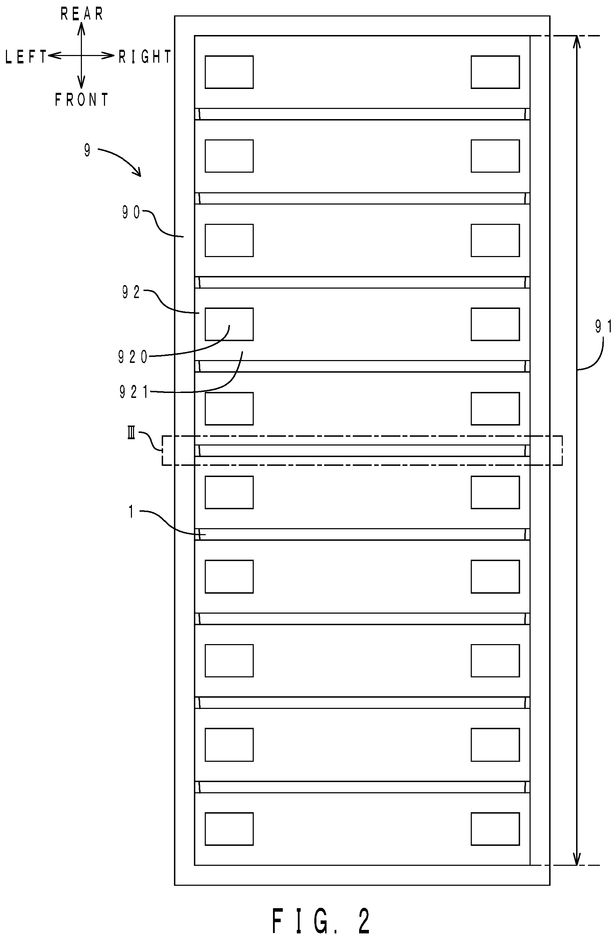

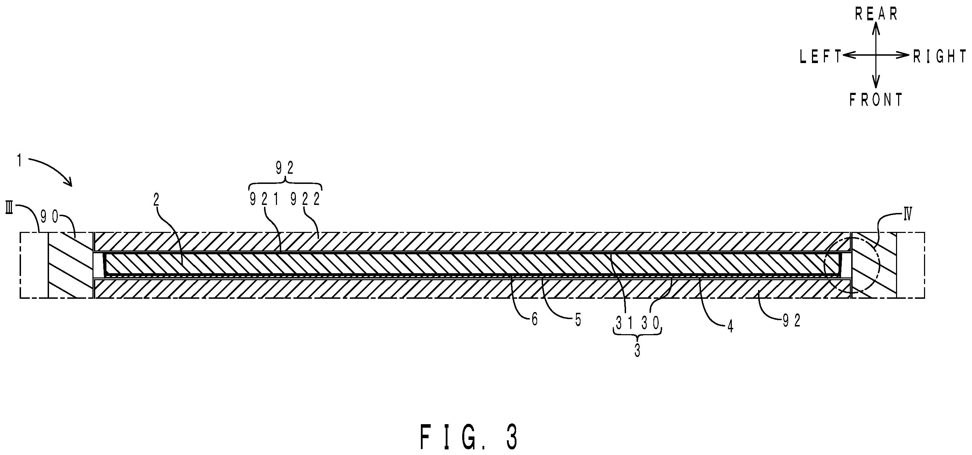

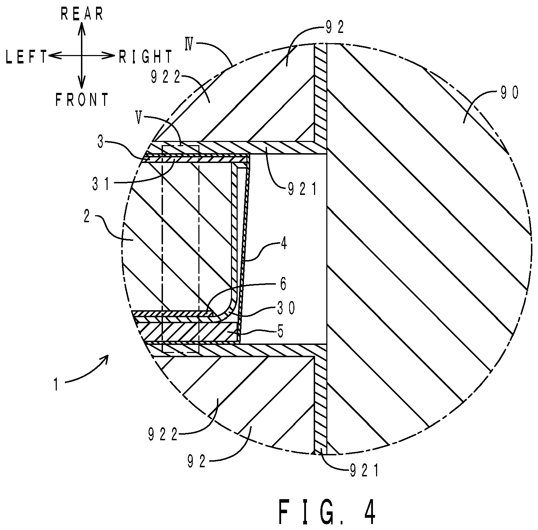

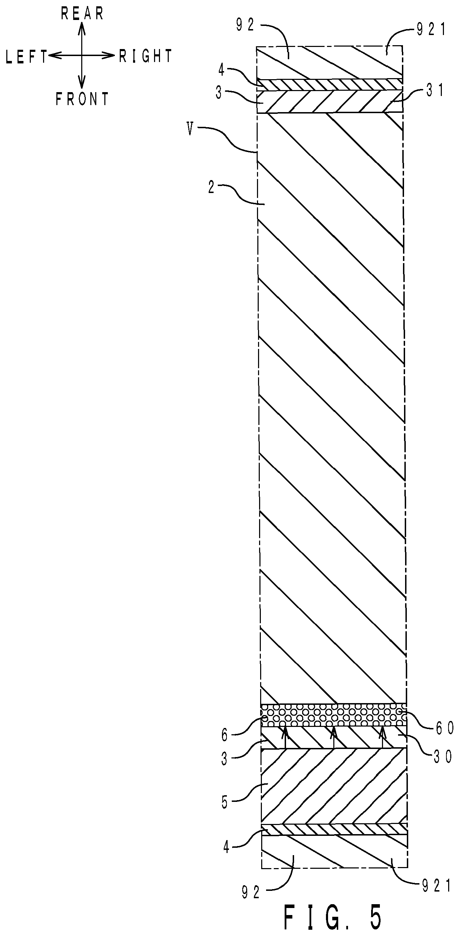

In the drawings described below, the front-rear direction corresponds to the "stacking direction" of the present disclosure. FIG. 1 is an exploded perspective view of a battery module including a partition member of the present embodiment. FIG. 2 is a top view of the battery module. FIG. 3 is a sectional view of the portion within frame III in FIG. 2, taken along the front-rear direction. FIG. 4 is an enlarged view of the portion within frame IV in FIG. 3. FIG. 5 is an enlarged view of the portion within frame V in FIG. 4.

### [Arrangement and Configuration of Partition Member]

First, the arrangement and configuration of the partition member according to the present embodiment will be described. A partition member 1 of the present embodiment is incorporated into a battery module 9 for a battery electric vehicle (a vehicle that runs only on electricity, not a hybrid). As shown in FIGS. 1 and 2, the battery module 9 includes a housing 90 and a stack 91.

The housing 90 has the shape of a bottomed box that is open at the top. The housing 90 extends in the front-rear direction. The stack 91 includes a plurality of cells (secondary battery cells) 92 and a plurality of partition members 1. The cells 92 and the partition members 1 are alternately stacked in the front-rear direction.

As shown in FIGS. 1 to 3, each cell 92 has the shape of a flat rectangular parallelepiped extending in the up-down and left-right directions (perpendicular directions, directions perpendicular to the stacking direction). That is, each cell 92 is a prismatic cell. Each cell 92 includes two terminals 920, a case 921, and contents 922 (schematically shown in the drawings). The terminals 920 of adjacent cells 92 in the front-rear direction are electrically connected to each other by a busbar (not shown).

As shown in FIGS. 1 and 2, the partition member 1 is interposed between any pair of adjacent cells 92 in the front-rear direction in the stack 91. The partition member 1 has the shape of a flat plate extending in the up-down and left-right directions.

As shown in FIGS. 3 to 5, the partition member 1 includes a heat-insulating layer 2, a nonwoven container 3, a film 4, a spacer layer 5, and a permeation-suppressing layer 6. The heat-insulating layer 2 is a compression-molded article of silica aerogel. The silica aerogel falls within the concept of "granular porous material" in the present disclosure. The heat-insulating layer 2 has the shape of a flat plate.

As shown in FIGS. 3 to 5, the spacer layer 5 is made of a thermoplastic resin (polypropylene) and has the shape of a flat plate. That is, the spacer layer 5 is made of a material different from that of the heat-insulating layer 2. The spacer layer 5 is disposed on the front side (one side in the stacking direction) of the heat-insulating layer 2 with the permeation-suppressing layer 6 and the nonwoven container 3, which will be described below, interposed therebetween. The spacer layer 5 is disposed on the rear side (the other side in the stacking direction) of the front cell 92 (the front cell 92 of the pair of cells 92 arranged in the front-rear direction) with the film 4, which will be described below, interposed therebetween. That is, the spacer layer 5 is interposed between the heat-insulating layer 2 on the rear side and the front cell 92.

As shown in FIGS. 3 to 5, the permeation-suppressing layer 6 is made of a porous material (glass fiber paper) and has the shape of a flat plate. As schematically shown in FIG. 5, the permeation-suppressing layer 6 has a large number of pores 60 inside. The permeation-suppressing layer 6 is disposed on the front side of the heat-insulating layer 2. The permeation-suppressing layer 6 is disposed on the rear side of the spacer layer 5 with the nonwoven container 3 interposed therebetween. That is, the permeation-suppressing layer 6 is interposed between the heat-insulating layer 2 on the rear side and the spacer layer 5 on the front side. As will be described later, the permeation-suppressing layer 6 suppresses permeation of the material forming the spacer layer 5 into the heat-insulating layer 2.

As shown in FIGS. 3 to 5, the nonwoven container 3 covers the heat-insulating layer 2 from the outside. The nonwoven container 3 is made of nonwoven fabric and includes a container body 30 and a lid 31. The container body 30 has the shape of a rectangular box (bag) that is open at the rear. The heat-insulating layer 2 and the permeation-suppressing layer 6 are accommodated in the container body 30 in this order from rear (the opening side of the container body 30) to front (the bottom wall side of the container body 30). The permeation-suppressing layer 6 is in contact with the inner surface (rear surface) of the bottom wall of the container body 30. The lid 31 seals the opening of the container body 30 from the rear side. The film 4 covers the nonwoven container 3 from the outside. The film 4 is made of a heat-shrinkable material (a material containing thermoplastic resin) and has the shape of a bag.

### [Method for Manufacturing Partition Member]

Next, a method for manufacturing the partition member according to the present embodiment will be briefly described. The method for manufacturing the partition member 1 includes a container accommodation step and a heat-shrinking step. In the container accommodation step, the permeation-suppressing layer 6 and the heat-insulating layer 2 are first placed inside the container body 30 shown in FIGS. 3 and 4 in this order from front to rear. Next, the lid 31 is welded to the opening of the container body 30. The permeation-suppressing layer 6 and the heat-insulating layer 2 are thus sealed inside the nonwoven container 3. In the heat-shrinking step, the spacer layer 5 and the nonwoven container 3 accommodating the permeation-suppressing layer 6 and the heat-insulating layer 2 are placed inside the film 4 before heat shrinking in this order from front to rear. Next, the film 4 is shrunk by heating, thereby bringing the film 4 into close contact with the spacer layer 5 and the nonwoven container 3. The partition member 1 of the present embodiment is manufactured in this manner. Thereafter, the cells 92 and the partition members 1 are alternately stacked in the front-rear direction outside the housing 90 shown in FIG. 1 to form the stack 91. The stack 91 is then inserted into the housing 90.

### [Functions and Effects]

Next, the functions and effects of the partition member of the present embodiment will be described. As shown in FIGS. 3 to 5, the partition member 1 includes the spacer layer 5. The restraining force (the pressing force in the front-rear direction) applied from the housing 90 to the cells 92 of the stack 91 can be adjusted by adjusting the number of spacer layers 5 arranged in the stack 91 and the thickness of the spacer layers 5 in the front-rear direction.

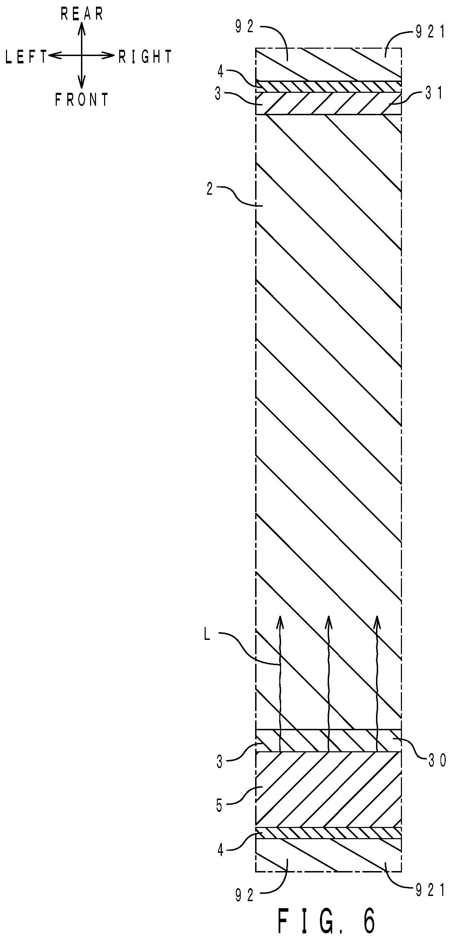

FIG. 6 is a partial sectional view of a partition member without a permeation-suppressing layer, taken along the front-rear direction. The portion shown in FIG. 6 corresponds to the portion within frame V in FIGS. 4 and 5. The partition member shown in FIG. 6 includes the spacer layer 5. The partition member does not include the permeation-suppressing layer 6 shown in FIG. 5.

It is herein assumed that, of the pair of cells 92 arranged in the front-rear direction shown in FIG. 6, the front cell 92 abnormally generates heat. The material forming the spacer layer 5 is a thermoplastic resin (polypropylene). Therefore, when the melting point of the material forming the spacer layer 5 (about 160°C in the case of polypropylene) is lower than the temperature of the cell 92 at the time of abnormal heat generation, the material forming the spacer layer 5 melts and liquefies due to the abnormal heat generation of the front cell 92. As a result, the liquefied material penetrates the container body 30 and permeates into the heat-insulating layer 2.

The heat-insulating layer 2 has a large number of pores (not shown) inside. The heat-insulating layer 2 ensures its heat-insulating properties by its own porosity. The liquefied material that has permeated into the heat-insulating layer 2 enters the pores of the heat-insulating layer 2. As a result, the heat-insulating properties of the heat-insulating layer 2 decrease. Accordingly, as schematically shown in FIG. 6, a heat transfer path L is formed between the front cell 92 and the inside of the heat-insulating layer 2 (the portion into which the liquefied material has permeated). The heat transfer path L has a higher thermal conductivity than the remaining portion of the heat-insulating layer 2 (the portion into which the liquefied material has not permeated). Therefore, the heat of the front cell 92 easily propagates through the heat transfer path L to the inside of the heat-insulating layer 2 and further to the rear cell 92.

As described above, in the case of the partition member shown in FIG. 6 (a partition member including the spacer layer 5 but not including the permeation-suppressing layer 6), when any cell 92 abnormally generates heat, the heat easily transfers to another cell 92 adjacent to the cell 92 across the partition member. That is, in the event of abnormal heat generation, a thermal chain reaction easily occurs between adjacent cells 92.

In this respect, as shown in FIGS. 4 and 5, the partition member 1 of the present embodiment includes the permeation-suppressing layer 6 in addition to the spacer layer 5. The layers of the stack 91 are stacked in the order of the front cell 92, the film 4, the spacer layer 5, the container body 30, the permeation-suppressing layer 6, and the heat-insulating layer 2 from front (one side in the stacking direction) to rear (the other side in the stacking direction). That is, the permeation-suppressing layer 6 is interposed between the spacer layer 5 and the heat-insulating layer 2. Accordingly, even when the material (polypropylene) forming the spacer layer 5 melts and liquefies due to abnormal heat generation of the front cell 92 and the liquefied material penetrates the container body 30, permeation of the liquefied material into the heat-insulating layer 2 can be suppressed. It is possible to suppress the occurrence of a thermal chain reaction between adjacent cells 92 in the event of abnormal heat generation.

More specifically, the liquefied material that has penetrated the container body 30 permeates into the permeation-suppressing layer 6. As shown in FIG. 5, the permeation-suppressing layer 6 has a large number of pores 60 inside. At least part of the liquefied material that has permeated into the permeation-suppressing layer 6 is absorbed and trapped in the pores 60. Therefore, penetration of the liquefied material through the permeation-suppressing layer 6 can be suppressed. Accordingly, permeation of the liquefied material into the heat-insulating layer 2 can be suppressed. As a result, a reduction in the heat-insulating properties of the heat-insulating layer 2 can be suppressed.

As described above, according to the partition member 1 of the present embodiment, a specific challenge associated with the partition member 1 including the spacer layer 5 (namely, the risk that the material forming the spacer layer 5 may permeate into the heat-insulating layer 2) can be addressed by the permeation-suppressing layer 6.

The heat-insulating layer 2 is a compression-molded article of silica aerogel. Silica aerogel has a high porosity compared with other porous materials. Therefore, the heat-insulating properties of the heat-insulating layer 2 can be improved. In addition, since silica aerogel has excellent chemical stability, the heat-insulating layer 2 is less likely to undergo deterioration.

The material forming the spacer layer 5 is polypropylene. Therefore, the manufacturing cost of the spacer layer 5 can be reduced. The spacer layer 5 is desired to have a predetermined rigidity in order for a restraining force (a pressing force in the front-rear direction) to be reliably applied to the cells 92. In this respect, since the material forming the spacer layer 5 is polypropylene, such rigidity can be easily ensured.

The permeation-suppressing layer 6 is made of a porous material (glass fiber paper). Therefore, it has excellent heat resistance. The melting point of the porous material forming the permeation-suppressing layer 6 is higher than the temperature of the cell 92 at the time of abnormal heat generation. Accordingly, even when the material forming the spacer layer 5 melts and liquefies, the permeation-suppressing layer 6 can maintain its own structure and properties. For example, the permeation-suppressing layer 6 can maintain its porosity. Therefore, the liquefied material can be reliably absorbed by the permeation-suppressing layer 6. In addition, since glass fiber paper is inexpensive, the manufacturing cost of the permeation-suppressing layer 6 can be reduced.

As shown in FIGS. 3 and 4, the heat-insulating layer 2 is accommodated in two layers, namely in the box-shaped nonwoven container 3 on the inside and the bag-shaped film 4 on the outside. This configuration can suppress leakage of powder of the heat-insulating layer 2 to the outside of the partition member 1. The film 4 constitutes the outermost layer of the partition member 1. The film 4 allows the partition member 1 to maintain its shape.

As shown in FIGS. 3 and 4, the spacer layer 5 is disposed outside the nonwoven container 3. The permeation-suppressing layer 6 is disposed inside the nonwoven container 3 together with the heat-insulating layer 2. That is, the permeation-suppressing layer 6 and the heat-insulating layer 2 are isolated from the spacer layer 5 by the nonwoven container 3. This configuration can suppress permeation of the material forming the spacer layer 5 into the heat-insulating layer 2.

As shown in FIGS. 3 and 4, the spacer layer 5 is disposed outside the nonwoven container 3. Therefore, compared with the case where the spacer layer 5 is disposed inside the nonwoven container 3, the spacer layer 5 can be replaced without being restricted by the volume of the nonwoven container 3. For example, any spacer layer 5 can be replaced with another spacer layer 5 having a different thickness in the front-rear direction.

The battery module 9 of a battery electric vehicle (a vehicle that runs only on electricity, not a hybrid) has a larger capacity than the battery module of a hybrid electric vehicle. Therefore, the cells 92 of the battery module 9 of the battery electric vehicle are more likely to abnormally generate heat than the cells 92 of the battery module of the hybrid electric vehicle.

In this respect, the partition member 1 of the present embodiment is incorporated into the battery module 9 of the battery electric vehicle. Therefore, in a battery electric vehicle that is more likely to abnormally generate heat compared with a hybrid electric vehicle, the occurrence of a thermal chain reaction between adjacent cells 92 can be suppressed. As described above, the partition member 1 of the present embodiment is suitable for being incorporated into the battery module 9 of a battery electric vehicle.

### <Second Embodiment>

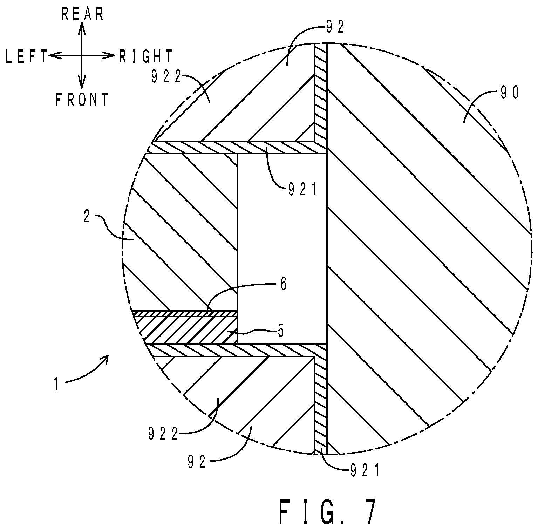

The partition member of the present embodiment differs from the partition member of the first embodiment in that the partition member is constituted by a heat-insulating layer, a spacer layer, and a permeation-suppressing layer alone. Only the differences will be described. FIG. 7 is a partial sectional view of the partition member of the present embodiment, taken along the front-rear direction. The portions corresponding to those in FIG. 4 are denoted by the same signs as those in FIG. 4. The portion shown in FIG. 7 corresponds to the portion within frame IV in FIGS. 3 and 4.

As shown in FIG. 7, the partition member 1 includes the spacer layer 5, the permeation-suppressing layer 6, and the heat-insulating layer 2 in this order from front to rear. The partition member 1 does not include the nonwoven container 3 and the film 4 shown in FIG. 4. The spacer layer 5 and the permeation-suppressing layer 6 are in contact with each other. The spacer layer 5 and the permeation-suppressing layer 6 are stacked directly in contact with each other, without another layer or member interposed therebetween.

For the portions having the same configuration as in the first embodiment, the partition member 1 of the present embodiment provides the same functions and effects as the partition member of the first embodiment. The number of components of the partition member 1 can be reduced in the present embodiment. The manufacturing cost can also be reduced.

As in the present embodiment, the spacer layer 5 and the permeation-suppressing layer 6 may be stacked directly in contact with each other, without another layer or member interposed therebetween. In this way, even when the material forming the spacer layer 5 liquefies, the liquefied material can be absorbed directly adjacent to the spacer layer 5. Therefore, diffusion of the liquefied material starting from the spacer layer 5 can be suppressed.

### <Third Embodiment>

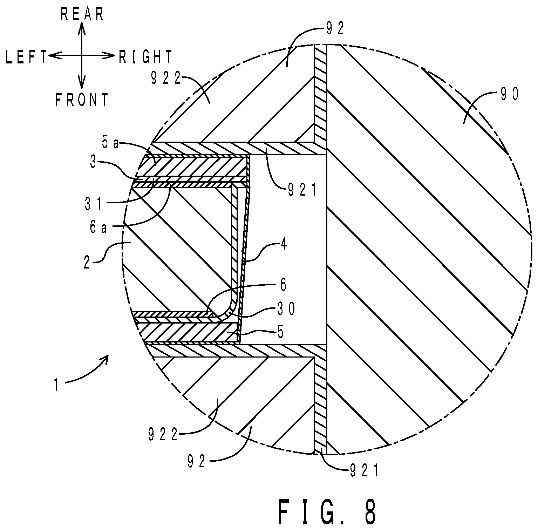

The partition member of the present embodiment differs from the partition member of the first embodiment in that the partition member includes a plurality of spacer layers and a plurality of permeation-suppressing layers. Only the differences will be described. FIG. 8 is a partial sectional view of the partition member of the present embodiment, taken along the front-rear direction. The portions corresponding to those in FIG. 4 are denoted by the same signs as those in FIG. 4. The portion shown in FIG. 8 corresponds to the portion within frame IV in FIGS. 3 and 4.

As shown in FIG. 8, the partition member 1 includes a pair of spacer layers 5, 5a arranged in the front-rear direction and a pair of permeation-suppressing layers 6, 6a arranged in the front-rear direction. The pair of spacer layers 5, 5a arranged in the front-rear direction has the same configuration. The pair of permeation-suppressing layers 6, 6a arranged in the front-rear direction have the same configuration. The configuration and arrangement of the front spacer layer 5 and the front permeation-suppressing layer 6 are the same as the configuration and arrangement of the spacer layer 5 and the permeation-suppressing layer 6 shown in FIG. 4.

The rear spacer layer 5a is disposed on the rear side (the other side in the stacking direction) of the heat-insulating layer 2 with the nonwoven container 3 and the rear permeation-suppressing layer 6a, which will be described below, interposed therebetween. The spacer layer 5a is disposed on the front side (one side in the stacking direction) of the rear cell 92 (the rear cell 92 of the pair of cells 92 arranged in the front-rear direction) with the film 4 interposed therebetween. That is, the spacer layer 5a is interposed between the heat-insulating layer 2 on the front side and the rear cell 92.

The rear permeation-suppressing layer 6a is disposed on the rear side of the heat-insulating layer 2. The permeation-suppressing layer 6a is disposed on the front side of the spacer layer 5a with the nonwoven container 3 interposed therebetween. That is, the permeation-suppressing layer 6a is interposed between the heat-insulating layer 2 on the front side and the rear spacer layer 5a. The permeation-suppressing layer 6a suppresses permeation of the material forming the spacer layer 5a into the heat-insulating layer 2.

For the portions having the same configuration as in the first embodiment, the partition member of the present embodiment provides the same functions and effects as the partition member of the first embodiment. In the present embodiment, the plurality of permeation-suppressing layers 6, 6a is disposed corresponding to the plurality of spacer layers 5, 5a, respectively. Therefore, even when the material forming at least one of the plurality of spacer layers 5, 5a liquefies, the liquefied material can be absorbed.

In the present embodiment, the plurality of permeation-suppressing layers 6, 6a is disposed on both sides of the heat-insulating layer 2 in the front-rear direction. Specifically, the front permeation-suppressing layer 6 covers the front surface of the heat-insulating layer 2. The rear permeation-suppressing layer 6a covers the rear surface of the heat-insulating layer 2. This configuration can suppress permeation of the material forming the spacer layers 5, 5a, when liquefied, into the heat-insulating layer 2 not only from one side in the front-rear direction but also from both sides in the front-rear direction (that is, from at least one of the front and rear sides in the front-rear direction).

### <Others>

The embodiments of the partition member of the present disclosure have been described above. However, the embodiments are not limited to those described above. The present disclosure can be carried out in various modified or improved forms that can be made by those skilled in the art.

### [Configuration]

The nonwoven container 3 or the film 4 shown in FIG. 4 may be incorporated into the partition member 1 shown in FIG. 7. The partition member 1 of FIG. 7 with such a configuration can suppress leakage of powder of the heat-insulating layer 2 to the outside of the partition member 1. This configuration also allows the partition member 1 to maintain its shape.

The positional relationship between the nonwoven container 3 and the spacer layers 5, 5a and permeation-suppressing layers 6, 6a is not particularly limited. For example, the spacer layers 5, 5a may be disposed outside the nonwoven container 3, and the permeation-suppressing layers 6, 6a may be disposed inside the nonwoven container 3. That is, the spacer layers 5, 5a and the permeation-suppressing layers 6, 6a may be disposed separately inside and outside the nonwoven container 3. Alternatively, the spacer layers 5, 5a and the permeation-suppressing layers 6, 6a may both be disposed inside the nonwoven container 3. Alternatively, the spacer layers 5, 5a and the permeation-suppressing layers 6, 6a may both be disposed outside the nonwoven container 3. The positional relationship between the film 4 and the spacer layers 5, 5a and permeation-suppressing layers 6, 6a is also not particularly limited.

At least one additional layer may be disposed in the partition member 1 shown in FIGS. 4, 7, and 8. For example, an elastic layer having greater flexibility (having a smaller spring constant in the front-rear direction) than the heat-insulating layer 2 may be incorporated into the partition member 1. In this way, the elastic force of the elastic layer can improve the adhesion between the partition member 1 and the cells 92. Deformation of the cells 92 (such as expansion or contraction) associated with charging and discharging can also be elastically absorbed.

The partition member 1 may be interposed in all of the "gaps between pairs of cells 92" of the stack 91 shown in FIGS. 1 and 2. Alternatively, the partition member 1 may be interposed in only part of the "gaps between pairs of cells 92" of the stack 91. The partition member 1 may be interposed in a gap between the housing 90 and the cells 92.

The spacer layers 5, 5a shown in FIGS. 4, 7, and 8 may be disposed in all of the partition members 1 of the stack 91 shown in FIGS. 1 and 2. Alternatively, the spacer layers 5, 5a may be disposed in part of the partition members 1 of the stack 91.

The number of spacer layers 5, 5a disposed in a single stack 91 is not particularly limited. As shown in FIG. 4, the stack 91 includes a plurality of "gaps between the cells 92 and the heat-insulating layer 2." The spacer layers 5, 5a may be disposed in all of the plurality of such gaps. Alternatively, the spacer layers 5, 5a may be disposed in part of the plurality of such gaps.

The number of permeation-suppressing layers 6, 6a disposed in a single stack 91 is not particularly limited. As shown in FIG. 4, the stack 91 includes a plurality of "gaps between the spacer layers 5, 5a and the heat-insulating layer 2." The permeation-suppressing layers 6, 6a may be disposed in all of the plurality of such gaps. Alternatively, the permeation-suppressing layers 6, 6a may be disposed in part of the plurality of such gaps.

The number of permeation-suppressing layers 6, 6a disposed for a single spacer layer 5 or 5a is not particularly limited. A pair of permeation-suppressing layers 6, 6a may be disposed such that one of the permeation-suppressing layers 6, 6a is disposed on one side of the spacer layer 5 or 5a in the front-rear direction, and the other one of the permeation-suppressing layers 6, 6a is disposed on the other side of the spacer layer 5 or 5a in the front-rear direction. Alternatively, a single permeation-suppressing layer 6 or 6a may be disposed on one side of the spacer layer 5 or 5a in the front-rear direction. That is, the permeation-suppressing layers 6, 6a may be disposed on whichever side(s) of the spacer layer 5 or 5a in the front-rear direction where suppression of outflow of the material forming the spacer layer 5 or 5a is desired.

The number of permeation-suppressing layers 6, 6a disposed for a single heat-insulating layer 2 is not particularly limited. A pair of permeation-suppressing layers 6, 6a may be disposed such that one of the permeation-suppressing layers 6, 6a is disposed on one side of the heat-insulating layer 2 in the front-rear direction, and the other one of the permeation-suppressing layers 6, 6a is disposed on the other side of the heat-insulating layer 2 in the front-rear direction. Alternatively, a single permeation-suppressing layer 6 or 6a may be disposed on one side of the heat-insulating layer 2 in the front-rear direction. That is, the permeation-suppressing layers 6, 6a may be disposed on whichever side(s) of the heat-insulating layer 2 in the front-rear direction where suppression of inflow of the material forming the spacer layers 5, 5a is desired.

The cause of liquefaction of the material forming the spacer layers 5, 5a is not particularly limited. Depending on the properties of the material forming the spacer layers 5, 5a, which will be described below, the cause of liquefaction may vary. Examples include melting, thermal decomposition, and hydrolysis of the material.

The liquid to be absorbed by the permeation-suppressing layers 6, 6a is not particularly limited to liquid derived from the material forming the spacer layers 5, 5a. For example, such liquid may be liquid derived from the material forming the heat-insulating layer 2 or liquid resulting from the environment in which the battery module 9 is placed (such as temperature or humidity).

The stacking direction of the partition member 1 and the cells 92 in the stack 91 is not particularly limited. The stacking direction may be a horizontal direction (front-rear direction or left-right direction), a perpendicular direction (up-down direction), or a direction inclined relative to these directions. The shape of the housing 90 is also not particularly limited. For example, the housing 90 may include a pair of end plates arranged in the front-rear direction and a pair of tie rods (restraining members) arranged in the left-right direction and connecting the pair of end plates. The type of cell 92 is not particularly limited. The cells may be prismatic cells, cylindrical cells, or laminate cells. The type of secondary battery cell is not particularly limited. The secondary battery cells may be lithium-ion cells, lithium-ion polymer cells, sodium-ion cells, or nickel metal hydride cells. The applications of the battery module 9 are not particularly limited. For example, it may be used in a battery electric vehicle or a hybrid electric vehicle. It may also be used in an electrically assisted bicycle, a mobile phone, a power tool, a notebook computer, etc.

### [Materials]

The material of the heat-insulating layer 2 is not particularly limited. The type of granular porous material for the heat-insulating layer 2 is not particularly limited. Examples of primary particles include silica, alumina, zirconia, and titania. Among these, silica is desirable as the primary particles because of its excellent chemical stability. That is, a silica aerogel in which a plurality of silica fine particles is interconnected to form a skeleton is desirable. An agglomerated structure in which a plurality of fumed silica fine particles is interconnected to form a skeleton is also suitable.

The method for producing silica aerogel is not particularly limited. The drying step may be performed either at ambient pressure or under supercritical conditions. For example, when hydrophobic treatment is performed before the drying step, it is not necessary to perform drying under supercritical conditions. That is, drying need only be performed at ambient pressure, allowing easier and lower-cost production. Depending on the drying method used in aerogel production, a material dried at ambient pressure is sometimes called "xerogel" and a material dried under supercritical conditions is sometimes called "aerogel." In the present specification, however, both are collectively referred to as "aerogel."

The heat-insulating layer 2 may contain, for example, infrared-shielding particles or inorganic fibers in addition to the granular porous material. The infrared-shielding particles absorb heat from a heat source and re-emit it from the surface on the heat source side, thereby blocking radiant heat from the heat source and contributing to improved heat insulation particularly at high temperatures. Examples of infrared-shielding particles include silicon carbide, kaolinite, montmorillonite, silicon nitride, mica, alumina, zirconia, aluminum nitride, titanium oxide, zirconium silicate, zinc oxide, tantalum oxide, tungsten oxide, niobium oxide, indium tin oxide, cerium oxide, boron carbide, manganese oxide, tin oxide, bismuth oxide, iron oxide, magnesium oxide, and barium titanate. Inorganic fibers are suitably ceramic fibers such as glass fibers or alumina fibers.

The material of the nonwoven container 3 is not particularly limited. It may be produced from, for example, glass fiber, rock wool, ceramic fiber, polyimide (PI) fiber, polyphenylene sulfide (PPS) fiber, or polyethylene terephthalate (PET) fiber.

The material of the film 4 is not particularly limited. Where a shrink film is used for at least part of the film 4, the shrink film material may be polyvinyl chloride (PVC), polypropylene (PP), polyethylene (PE), polystyrene (PS), polyethylene terephthalate (PET), or the like. The film 4 may also be a film other than a shrink film. It may be a resin film not containing a thermoplastic resin. For example, it may be a bag-shaped film for vacuum packaging. The materials of the housing 90 and the case 921 are not particularly limited. For example, they may be a resin such as polypropylene, or a metal such as steel, aluminum, or an aluminum alloy.

The material of the spacer layers 5, 5a is not particularly limited. For example, it may be a thermoplastic resin, a thermosetting resin, a reinforced resin thereof (for example, PA6-GF30), or a metal. Examples of thermoplastic resins include polyvinyl chloride, polypropylene, polyethylene, polystyrene, polyethylene terephthalate, polyamide (PA), polytetrafluoroethylene (PTFE), acrylonitrile-butadiene-styrene resin (ABS), polyacetal (POM), and acrylic resins. Examples of thermosetting resins include epoxy resin (EP), phenol resin (PF), silicone resin, and unsaturated polyester resin (UP). Examples of metals include aluminum, aluminum alloys, and steel (specifically, hot-rolled steel sheet, cold-rolled steel sheet, and stainless steel sheet). Various materials may be used depending on the specifications of the battery module 9.

The material of the permeation-suppressing layers 6, 6a is not particularly limited. The permeation-suppressing layers 6, 6a may or may not have porosity. When the permeation-suppressing layers 6, 6a have porosity, that is, when the permeation-suppressing layers 6, 6a have a function to absorb liquefied material (a function of suppressing permeation of the liquefied material into the heat-insulating layer 2 by absorbing the liquefied material), examples of materials forming the permeation-suppressing layers 6, 6a include glass fibers (glass fiber paper), paper-based phenolic laminate, fabric-based phenolic laminate, rock wool, glass wool, ceramic fibers, polyimide fibers, and polyphenylene sulfide fibers.

In the case where the permeation-suppressing layers 6, 6a do not have porosity, that is, when the permeation-suppressing layers 6, 6a have a liquefied-material blocking function (a function to suppress permeation of a liquefied material into the heat-insulating layer 2 by blocking the liquefied material), examples of the material forming the permeation-suppressing layers 6, 6a include solid (nonporous) resins and metals.

### Description of the Reference Numerals

1 . . . partition member, 2 . . . heat-insulating layer, 3 . . . nonwoven container, 4 . . . film, 5 . . . spacer layer, 5a . . . spacer layer, 6 . . . permeation-suppressing layer, 6a . . . permeation-suppressing layer, 9 . . . battery module, 30 . . . container body, 31 ... lid, 90 . . . housing, 91 . . . stack, 92 . . . cell, 920 . . . terminal, 921 . . . case, 922 ... contents, L . . . heat transfer path

## Claims

1. A partition member interposed between any pair of cells adjacent to each other in a stacking direction in a stack of a plurality of cells, the partition member **characterized by** comprising:
a heat-insulating layer;
a spacer layer interposed between the heat-insulating layer and the cell, the spacer layer being made of a material different from a material of the heat-insulating layer; and
a permeation-suppressing layer interposed between the heat-insulating layer and the spacer layer, the permeation-suppressing layer being configured to suppress permeation of the material of the spacer layer into the heat-insulating layer.

2. The partition member according to claim 1, wherein the heat-insulating layer is a compression-molded article of a granular porous material, the granular porous material being a porous body made of a granular material.

3. The partition member according to claim 1, wherein the material of the spacer layer is any one of polypropylene, polyethylene, aluminum, an aluminum alloy, phenolic resin, polyacetal, acrylic, or a fiber-reinforced product of any one of these materials.

4. The partition member according to claim 1, wherein the permeation-suppressing layer is made of a porous material.

5. The partition member according to claim 4, wherein the porous material is any one of glass fiber paper, paper-based phenolic laminate, carbon fiber paper, or ceramic fiber paper.
